# EUROPEAN PATENT APPLICATION

(11) **EP 2 315 442 A1**
(43) Date of publication of application: **27.04.2011**
(21) Application number: 09797913.2
(22) Date of filing: 14.07.2009
(51) Int. Cl.: H04N 7/173

(54) **DATA TRANSMISSION DEVICE, METHOD FOR TRANSMITTING DATA, AUDIO-VISUAL ENVIRONMENT CONTROL DEVICE, AUDIO-VISUAL ENVIRONMENT CONTROL SYSTEM, AND METHOD FOR CONTROLLING AUDIO-VISUAL ENVIRONMENT**

(30) Priority: 15.07.2008 JP 2008183815; 27.01.2009 JP 2009015373
(71) Applicant: Sharp Kabushiki Kaisha, Osaka-shi, Osaka 545-8522 (JP)
(72) Inventor: IWANAMI, Takuya, Osaka-shi, Osaka 545-8522 (JP); TOKUMO, Yasuaki, Osaka-shi, Osaka 545-8522 (JP); OGISAWA, Yoshiaki, Osaka-shi, Osaka 545-8522 (JP); ITOH, Norio, Osaka-shi, Osaka 545-8522 (JP); WATANABE, Shuhichi, Osaka-shi, Osaka 545-8522 (JP); HASEGAWA, Shinya, Osaka-shi, Osaka 545-8522 (JP); YOSHII, Takashi, Osaka-shi, Osaka 545-8522 (JP)
(74) Representative: Müller - Hoffmann & Partner
(86) International application number: PCT/JP2009/062737
(87) International publication number: WO 2010/007988

(57) **Abstract**

Provided are a data transmission device, a method for transmitting data, an audio-video environment control device, a method for controlling audio-visual environment, an audio-video environment control system, wherein peripheral devices can be appropriately controlled in accordance with the layout of the peripheral devices in an actual audio-visual environment so that a high realistic sensation is obtained. A data reception device (20) receives a predetermined video data and/or audio data, identification information indicative of an arrangement pattern of peripheral devices (lighting devices) arranged in a virtual audio-visual environment space, lighting control data corresponding to the peripheral devices arranged in the virtual audio-visual environment space. A lighting dimming data generation unit generates driving control data for driving and controlling an actual lighting device (32) in accordance with identification information, lighting control data, and arrangement information of the lighting device (32) in an actual audio-visual environment space, wherein the arrangement information is acquired from a lighting arrangement information memory unit (25).

## Description

### TECHNICAL FIELD

The present invention relates to a data transmitting apparatus, a data transmitting method, an audio-visual environment controlling apparatus, an audio-visual environment controlling system, and an audio-visual environment controlling method, particularly to a data transmitting apparatus, a data transmitting method, an audio-visual environment controlling apparatus, an audio-visual environment controlling system, and an audio-visual environment controlling method for controlling a peripheral device in an audio-visual environment space of a user to realize viewing/listening of a video/sound content with a highly realistic sensation.

### BACKGROUND OF THE INVENTION

In recent years, videos and sounds with a realistic sensation has come to be enjoyed because displays are growing in side, widening their viewing angles and having high definition and surround-sound systems is progressing due to rapid improvement in electronic technologies for videos/sounds. For example, in home theater systems, which are currently becoming more and more widely used, a combination of a large-size display or screen and multi-channel audio/acoustic technology realizes systems for achieving a high realistic sensation.

Moreover, particularly in recent years, not a system for enjoying videos using only single display, but a system for viewing/listening wide field images using a combination of a plurality of displays, and a system in which videos displayed on a display and illumination light of a lighting device are linked to operate together, and the like are proposed, and systems capable of further enhancing a realistic sensation by a combination of a plurality of media are under considerable development.

In particular, the technology for linking a display and a lighting device to operate together in order to realize a high realistic sensation provides a high realistic sensation without using a large-size display, and thereby, reduces restrictions of costs and installation space, is placed more expectations and is getting a lot of attention.

According to the technology, illumination light of a plurality of lighting devices installed in a viewer's room (audio-visual environment space) is controlled to have color and intensity according to videos displayed on a display, so that it is possible to provide such a sense/effect that as if the viewer existed in a video space displayed on the display. For example, Patent document 1 discloses such a technology in which images displayed on a display and illumination light of a lighting device are linked to operate together.

The technology disclosed therein is aimed to provide a high realistic sensation, and a method for generating lighting control data for a plurality of lighting devices according to the feature amount (representative color and average luminance) of video data in a lighting system for controlling the plurality of lighting devices linked to operate with videos to be displayed is described. Specifically, it is described to detect the feature amount of video data in a screen area that is determined in advance according to the installation position of each of the lighting devices and lighting control data for each of the lighting devices to generate based on the detected feature amount.

Moreover, it is described that the lighting control data may not only be obtained by calculation from the feature amount of video data, but may also be distributed either solely or in combination with video data through the Internet or the like or may be distributed through carrier waves.

### RELATED ART DOCUMENT

### PATENT DOCUMENT

[Patent document 1] Japanese Laid-Open Patent Publication No. 2001-343900

### DISCLOSURE OF THE INVENTION

### PROBLEMS TO BE SOLVED BY THE INVENTION

As described above, Patent document 1 describes that lighting control data may be distributed from outside through the Internet or the like. However, since the lighting control data is lighting control data which corresponds only to a layout of lighting devices determined in advance (installation positions of lighting devices in a virtual audio-visual environment space), there is a problem that it is impossible to carry out appropriate lighting control according to an arrangement layout of lighting devices that varies for each user.

The present invention has been made in view of the above problem of the conventional technology and an object thereof is to provide a data transmitting apparatus, a data transmitting method, an audio-visual environment controlling apparatus, an audio-visual environment controlling method, an audio-visual environment controlling system, and an audio-visual environment controlling method capable of carrying out appropriate control over a peripheral device according to an arrangement layout, etc. of the peripheral device in an actual audio-visual environment space.

### MEANS FOR SOLVING THE PROBLEM

In order to solve the above problem, a first technical means of the present invention is a data transmitting apparatus for transmitting video data and/or sound data, comprising transmitting means for transmitting identification information indicating an arrangement pattern of a peripheral device in a virtual audio-visual environment space and audio-visual environment control data for the peripheral device in the virtual audio-visual environment space by attaching them to the video data and/or the sound data.

A second technical means of the present invention is the data transmitting apparatus as defined in the first technical means, wherein the arrangement pattern of the peripheral device indicated by the identification information includes such an arrangement pattern that the peripheral device is installed on a ceiling in the virtual audio-visual environment space.

A third technical means of the present invention is the data transmitting apparatus as defined in the first technical means, wherein the arrangement pattern of the peripheral device indicated by the identification information includes such an arrangement pattern that the peripheral device is installed on a left side around a video display device for displaying the video data in the virtual audio-visual environment space.

A fourth technical means of the present invention is the data transmitting apparatus as defined in the first technical means, wherein the arrangement pattern of the peripheral device indicated by the identification information includes such an arrangement pattern that the peripheral device is installed on a right side around a video display device for displaying the video data in the virtual audio-visual environment space.

A fifth technical means of the present invention is the data transmitting apparatus as defined in the first technical means, wherein the arrangement pattern of the peripheral device indicated by the identification information includes such an arrangement pattern that the peripheral device is installed around a rear back face part around a video display device for displaying the video data in the virtual audio-visual environment space.

A sixth technical means of the present invention is the data transmitting apparatus as defined in any one of the first technical means to fifth technical means, wherein the audio-visual environment control data includes position information indicating an installation position of the peripheral device constituting the arrangement pattern.

A seventh technical means of the present invention is the data transmitting apparatus as defined in any one of the first technical means to sixth technical means, wherein the audio-visual environment control data includes position information indicating an installation direction of the peripheral device constituting the arrangement pattern.

An eighth technical means of the present invention is the data transmitting apparatus as defined in any one of the first to seventh technical means, wherein the audio-visual environment control data includes information indicating driving priority order for the peripheral device.

A ninth technical means of the present invention is the data transmitting apparatus as defined in any one of the first to eighth technical means, wherein the audio-visual environment control data includes mode information representing a description method of the audio-visual environment control data for the peripheral device.

A tenth technical means of the present invention is the data transmitting apparatus as defined in the ninth technical means, wherein the mode information includes information indicating that a driving control value for the peripheral device is described by an absolute value.

An eleventh technical means of the present invention is the data transmitting apparatus as defined in the ninth technical means, wherein the mode information includes information indicating that a driving control value for the peripheral device is described by a difference value from a driving control value for other designated peripheral device.

A twelfth technical means of the present invention is the data transmitting apparatus as defined in the ninth technical means, wherein the mode information includes information indicating that a driving control value for the peripheral device is described by a rate value to a driving control value for other designated peripheral device.

A thirteenth technical means of the present invention is the data transmitting apparatus as defined in the ninth technical means, wherein the mode information includes information indicating that a driving control value for the peripheral device is the same as a driving control value for other designated peripheral device.

A fourteenth technical means of the present invention is a data transmitting apparatus, comprising: storage means for storing identification information indicating an arrangement pattern of a peripheral device in a virtual audio-visual environment space and audio-visual environment control data for the peripheral device in the virtual audio-visual environment space by associating them with video data and/or sound data; and transmitting means for transmitting, upon reception of a transmission request from an external apparatus, the identification information and the audio-visual environment control data related to predetermined video data and/or sound data to the external apparatus giving the transmission request.

A fifteenth technical means of the present invention is the data transmitting apparatus as defined in any one of the first to fourteenth technical means, wherein the peripheral device in the virtual audio-visual environment space is a lighting device.

A sixteenth technical means of the present invention is the data transmitting apparatus as defined in any one of the first to fourteenth technical means, wherein the peripheral device in the virtual audio-visual environment space is a wind blowing device.

A seventeenth technical means of the present invention is an audio-visual environment controlling apparatus, comprising: receiving means for receiving video data and/or sound data, and receiving identification information indicating an arrangement pattern of a peripheral device in a virtual audio-visual environment space and audio-visual environment control data for the peripheral device in the virtual audio-visual environment space; storage means for storing device arrangement information representing an arrangement pattern of a peripheral device in an actual audio-visual environment space; and driving control data generating means for converting the audio-visual environment control data into driving control data for performing drive control of the peripheral device in the actual audio-visual environment space, using the identification information received by the receiving means and the device arrangement information stored in the storage means.

An eighteenth technical means of the present invention is the audio-visual environment controlling apparatus as defined in the seventeenth technical means, wherein the audio-visual environment control data includes position information indicating an installation position of the peripheral device constituting the arrangement pattern.

A nineteenth technical means of the present invention is the data transmitting apparatus as defined in the seventeenth or eighteenth technical means, wherein the audio-visual environment control data includes position information indicating an installation direction of the peripheral device constituting the arrangement pattern.

A twentieth technical means of the present invention is an audio-visual environment controlling system, comprising: the audio-visual environment controlling apparatus as defined in the seventeenth technical means; a video/sound reproducing device for reproducing the video data and/or the sound data; and a peripheral device installed around the video/sound reproducing device.

A twenty-first technical means of the present invention is a data transmitting method for transmitting video data and/or sound data, comprising: transmitting identification information indicating an arrangement pattern of a peripheral device in a virtual audio-visual environment space and audio-visual environment control data for the peripheral device in the virtual audio-visual environment space by attaching to the video data and/or the sound data.

A twenty-second technical means of the present invention is a data transmitting method, comprising: storing identification information indicating an arrangement pattern of a peripheral device in a virtual audio-visual environment space and audio-visual environment control data for the peripheral device in the virtual audio-visual environment space by associating them with video data and/or sound data; and transmitting, upon reception of a transmission request from an external apparatus, the identification information and the audio-visual environment control data related to predetermined video data and/or sound data to the external apparatus giving the transmission request.

A twenty-third technical means of the present invention is an audio-visual environment controlling method, comprising: a step of receiving video data and/or sound data; a step of receiving identification information indicating an arrangement pattern of a peripheral device in a virtual audio-visual environment space and audio-visual environment control data for the peripheral device in the virtual audio-visual environment space; a step of storing device arrangement information representing an arrangement pattern of a peripheral device in an actual audio-visual environment space; and a step of converting the audio-visual environment control data into driving control data for controlling driving of the peripheral device in the actual audio-visual environment space, using the identification information received and the device arrangement information stored.

### EFFECTS OF THE INVENTION

According to the present invention, transmitting identification information indicating an arrangement pattern of a peripheral device arranged in a virtual audio-visual environment space and audio-visual environment control data for controlling the peripheral device arranged in the virtual audio-visual environment space, to a predetermined video and/or sound content allows to detect what kind of arrangement pattern of the peripheral device in an audio-visual environment space is supposed to generate the audio-visual environment control data and to convert into driving control data for controlling driving of a peripheral device arranged in an actual audio-visual environment space, and thus an appropriate control over the audio-visual environment space can be obtained to provide an audio-visual environment providing a user with a high realistic sensation.

### BRIEF DESCRIPTION OF DRAWINGS

[Fig. 1] Fig. 1 is a block diagram illustrating an exemplary schematic configuration of a data transmitting apparatus according to an embodiment of the present invention.
[Fig. 2] Fig. 2 is a view illustrating an example of descriptive contents of identification information according to an embodiment of the present invention.
[Fig. 3] Fig. 3 is a view illustrating an example of arrangement of lighting devices in an audio-visual environment space.
[Fig. 4] Fig. 4 is a view illustrating an example of an audio-visual environment space.
[Fig. 5] Fig. 5 is a view illustrating another example of arrangement of lighting devices in an audio-visual environment space.
[Fig. 6] Fig. 6 is a view illustrating another example of an audio-visual environment space.
[Fig. 7] Fig. 7 is a block diagram illustrating an exemplary schematic configuration of an audio-visual environment controlling system according to an embodiment of the present invention.
[Fig. 8] Fig. 8 is a view illustrating classification of visual fields.
[Fig. 9] Fig. 9 is a view illustrating an example of descriptive contents of lighting control data.
[Fig. 10] Fig. 10 is a view illustrating an example of priority information.
[Fig. 11] Fig.11 is a view illustrating an example of mode information.
[Fig. 12] Fig. 12 is an explanatory view illustrating an example of lighting control data described by an XML document.
[Fig. 13] Fig. 13 is an explanatory view illustrating XML schema corresponding to lighting control data.
[Fig. 14] Fig. 14 is a view illustrating an arrangement pattern of a plurality of lighting devices and a configuration of tables which are referred to when a position of each lighting device is described, according to another embodiment of the present invention.
[Fig. 15] Fig. 15 is a view for explaining exemplary arrangement of lighting.
[Fig. 16] Fig. 16 is a view illustrating an arrangement pattern of a plurality of wind blowers and a configuration of tables which are referred to when a position of each wind blower is described, according to another embodiment of the present invention.
[Fig. 17] Fig. 17 is an explanatory view illustrating an example of arrangement patterns and positions of lightings and wind blowers described by an XML document, according to another embodiment of the present invention.
[Fig. 18] Fig. 18 is a flowchart of operations related to determination of lighting to be controlled.
[Fig. 19] Fig. 19 is a view for explaining an example of a light-irradiation direction in a lighting device.
[Fig. 20] Fig. 20 is a view illustrating another exemplary configuration of tables which are referred to when a position of each peripheral device is described.
[Fig. 21] Fig. 21 is a block diagram illustrating a main schematic configuration of an external server apparatus according to yet another embodiment of the present invention.
[Fig. 22] Fig. 22 is a block diagram illustrating a main schematic configuration of a data receiving apparatus according to yet another embodiment of the present invention.

### PREFERRED EMBODIMENTS OF THE INVENTION

Although description will be given below for a data transmitting apparatus, a data transmitting method, an audio-visual environment controlling apparatus, and an audio-visual environment controlling system according to an embodiment of the present invention, by mainly taking a lighting device as an example of a peripheral device arranged in an audio-visual environment space, and they are also applicable to any apparatus that control an audio-visual environment such as an air conditioner, a wind blower, a vibration device, and a scent generating device without limitation to the lighting device.

### (Embodiment 1)

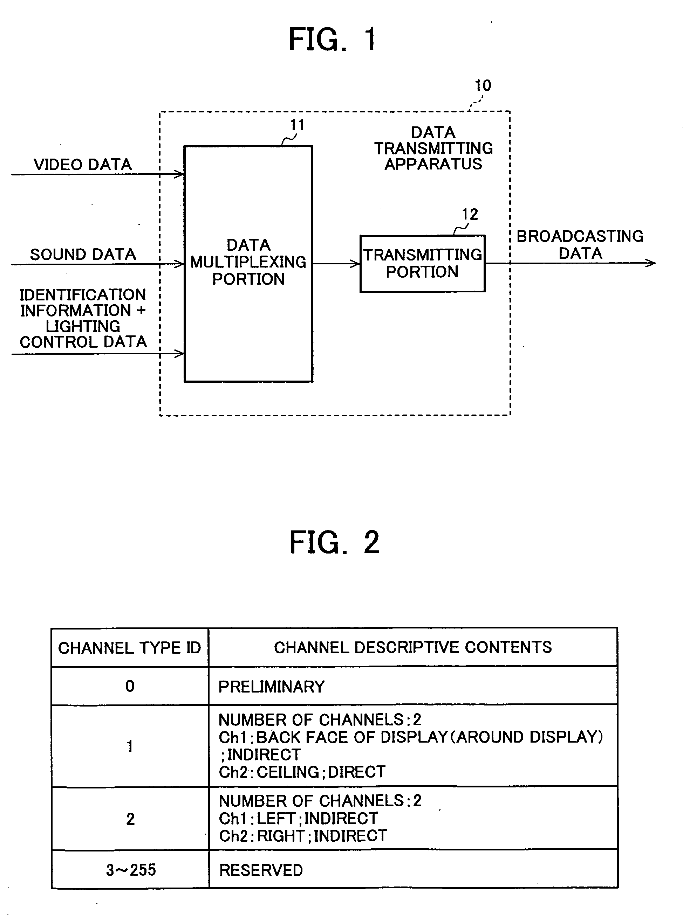

Fig. 1 is a block diagram illustrating an exemplary schematic configuration of a data transmitting apparatus according to an embodiment of the present invention.
A data transmitting apparatus 10 in the present embodiment is comprised of a data multiplexing portion 11 and a transmitting portion 12.
Input video data is compressed and coded to be output to the data multiplexing portion 11. Various compression methods are usable for the video coding, including ISO/IEC 13818-2 (MPEG-2 Video), ISO/IEC 14496-2 (MPEG-4 Visual), ISO/IEC 14496-10 (MPEG-4 AVC), and the like.
Similarly, input sound data is compressed and coded to be output to the data multiplexing portion 11. Various compression methods are usable for the sound coding, including ISO/IEC 13818-7 (MPEG-2 AAC), ISO/IEC 14496-3 (MPEG-4 Audio), and the like.

Further, identification information and lighting control data are compressed and coded to be output to the data multiplexing portion 11. Note that, the identification information and the lighting control data will be described below in detail. As a description method of the identification information and the lighting control, for example, the XML (Extensible Markup Language) format and the like are used. In addition, for a compression method of the audio-visual environment control data, the BiM (Binary format for MPEG-7) format in ISO/IEC 15938-1 (MPEG-7 Systems) and the like are usable. Alternatively, the data may be output in the very XML format without being compressed.
The video data, the sound data, the identification information, and the lighting control data that have been coded are multiplexed by the data multiplexing portion 11 and sent or accumulated through the transmitting portion 12. As a multiplexing method, for example, an MPEG-2 transport stream packet (TSP), an IP packet, an RTP packet, and the like in ISO/IEC 13818-1 (MPEG-2 Systems) are usable.

For example, when the transport stream packet (TSP) prescribed in the MPEG-2 is used, it is possible that, subsequent to a header in which information prescribed in the MPEG-2 is described, audio-visual environment control data is described in an extended header portion, and further video data and sound data are sent by a payload subsequent to the extended header. Alternatively, identification information and lighting control data may be sent by a payload, similarly to video data and sound data. Moreover, video data, sound data, identification information, and lighting control data may be sent with each of different data streams multiplexed.

Here, the identification information indicates an arrangement pattern of a peripheral device in a virtual audio-visual environment space, and in the case of a lighting device, it indicates an arrangement pattern of the lighting device arranged in an audio-visual environment space (which may include, in the case of a lighting device, information about an arrangement place of the lighting device, as well as, for example, information as to what kind of lighting method is taken, information as to the place to be lighted, and information indicating an irradiation direction and an irradiation angle), and Fig. 2 illustrates a case where the number of channels of the lighting device, an arrangement place of the lighting device for each channel number, and lighting methods are defined, as an example of identification information (channel type ID) according to an arrangement pattern of the lighting device.

When the channel type ID is set to "1" in Fig. 2, two lighting devices Ch1 and Ch2 are provided, and such a lighting arrangement pattern is shown that Ch1 lights (indirectly lights) a back face (surround) of a video display device (display) and Ch2 lights (directly lights) downward from the ceiling.

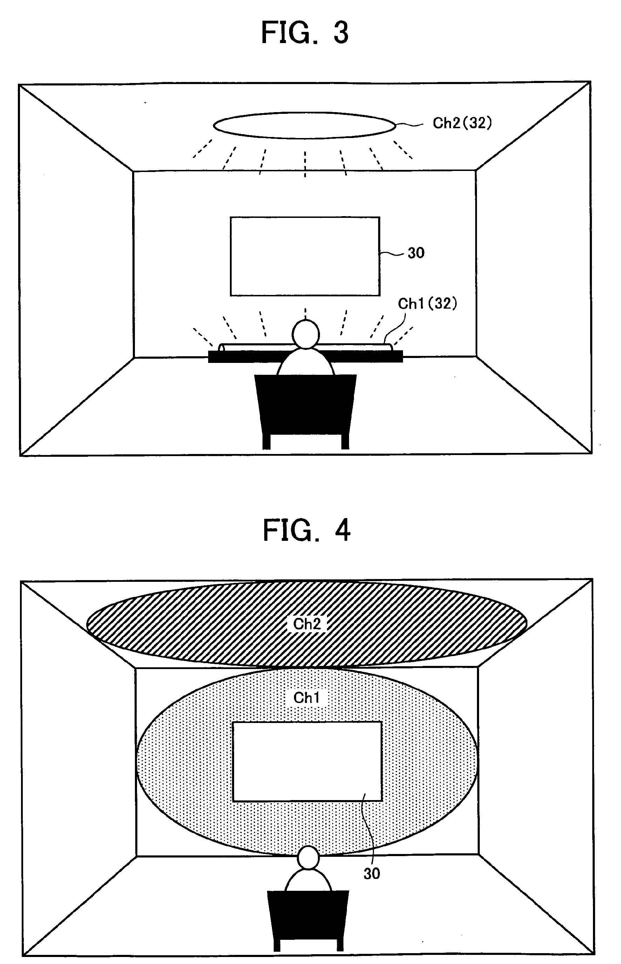

Fig. 3 illustrates an arrangement pattern of lighting devices 32 (Ch1 and Ch2) with respect to a display 30, that is defined when the channel type ID is "1", where Ch1 is arranged below the display 30 and Ch2 is arranged on the ceiling. Moreover, Fig. 4 illustrates an audio-visual environment space corresponding to the case where the channel type ID is "1", and illustrates that a rear face (surround) of the display 30 is lighted by Ch1 and the entire space is lighted from the ceiling by Ch2.

In addition, when the channel type ID is set to "2" in Fig. 2, two lighting devices Ch1 and Ch2 are provided, and such a lighting arrangement pattern is shown that Ch1 lights (indirectly lights) the leftside of back face of the display and Ch2 lights (indirectly lights) the rightside of back face of the display.

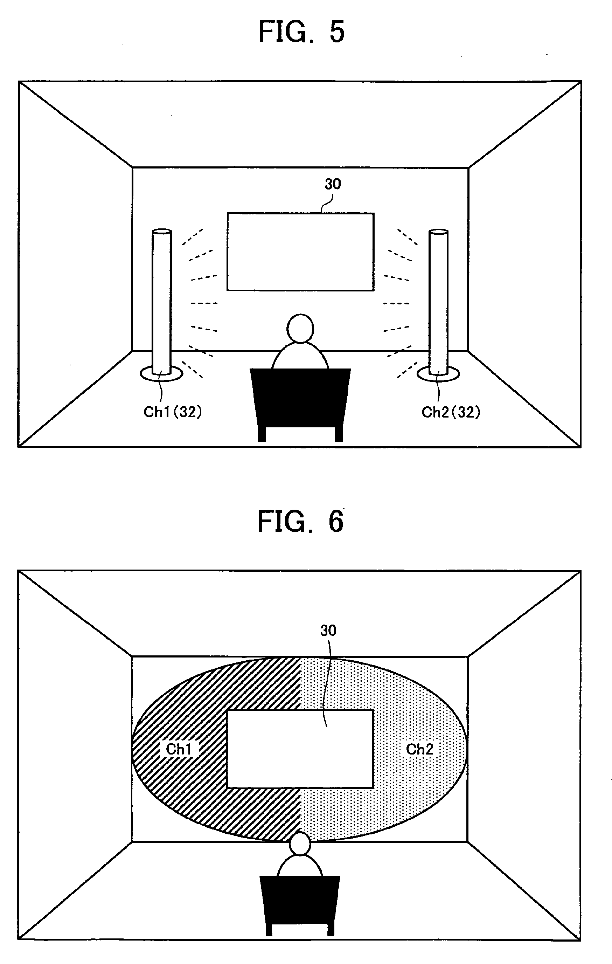

Fig. 5 illustrates an arrangement pattern of the lighting devices 32 (Ch1 and Ch2) with respect to the display 30, that is defined when the channel type ID is "2", where Ch1 is arranged on the left side of the display 30 and the Ch2 is arranged on the right side of the display 30. Moreover, Fig. 6 illustrates an audio-visual environment space corresponding to the case where the channel type ID is "2", and illustrates that the leftside of back face of the display 30 is lighted by Ch1 and the rightsided of back face of the display 30 is lighted by Ch2.

Note that, in the example illustrated in Fig. 2, identification information (channel type ID) is ensured for 8 bits (256 pieces) and another arrangement pattern of lighting is able to be defined. Note that, the number of channels of lighting is also not limited to two channels and an arrangement pattern of one or more channel may obviously be defined.
For example, similarly to the case illustrated in Fig. 5, when such an installation place of lighting devices is supposed that one each is arranged on the right side and the left side of the display to produce direct lighting toward the viewer side, (not shown), "the number of channels 2, Ch1: left; direct, Ch2: right; direct" may be defined by the channel type ID "3", for example.

Further, lighting control data, which will be described below in detail, constitutes audio-visual environment control data for lighting devices arranged in a virtual audio-visual environment space, and is control data for performing drive control of lighting device of each channel constituting an arrangement pattern defined by identification information.
It may be therefore said that the arrangement pattern of lighting devices indicated by identification information shows an audio-visual environment that is a premise that lighting control data is generated.

In addition, the lighting control data is provided to be linked to operate with video/sound data, but is not indispensably attached to each frame of the video data, and may be attached to the video data regularly with appropriate intervals or irregularly by attaching for each scene or shot of the video data related to each other in a story.

Note that, although it is configured such that four types of data including the video data, the sound data, the identification information, and the lighting control data are multiplexed and then transmitted as broadcasting data in the present embodiment, the multiplexing is not an essential requirement and an appropriate transmitting method may be selected as necessary. For example, it may be configured such that respective data are transmitted individually without multiplexing, and further, the video data and the sound data are multiplexed and the identification information and the lighting control data are transmitted independently.

Further, as described below, it may be configured such that the identification information and the lighting control data are accumulated in an external server apparatus to which access is allowed through the Internet or the like, and a URL (Uniform Resource Locator) or the like for identifying the identification information and the lighting control data that have been accumulated is multiplexed and transmitted with the video data. Moreover, when the identification information and the lighting control data are transmitted through a network different from the one through which the video data is transmitted, the information for associating the identification information and the lighting control data with the video data is not limited to the URL described above and may be any information which allows to specify a corresponding relation between the identification information and the lighting control data, and the video data, including a content name and the like.

Note that, when the identification information and the lighting control data are transmitted through a network different from the one through which the video/sound multiplexed data is transmitted, the specification information for associating the identification information and the lighting control data with the video/sound multiplexed data is not limited to the URL described above and may be any specification information which allows to specify a corresponding relation between the video/sound multiplexed data, and the identification information and the lighting control data, including a CRID (Content Reference ID) in the TV-Anytime specification, a content name, and the like.
Alternatively, only the identification information and the lighting control data may be recorded in another recording medium for distribution. For example, there is a case where the video/sound data is distributed by means of a large capacity recording medium such as a Blu-ray Disc and a DVD, and the identification information and the lighting control data are distributed by means of a small-sized semiconductor recording medium or the like. In this case, when a plurality of contents are recorded for distribution, specification information which allows to show a corresponding relation between the video/sound data and both of the identification information and the lighting control data is also necessary.
Note that, the identification information and the lighting control data are treated as separate data in the present embodiment, but may obviously be described in a single data format including both data contents.

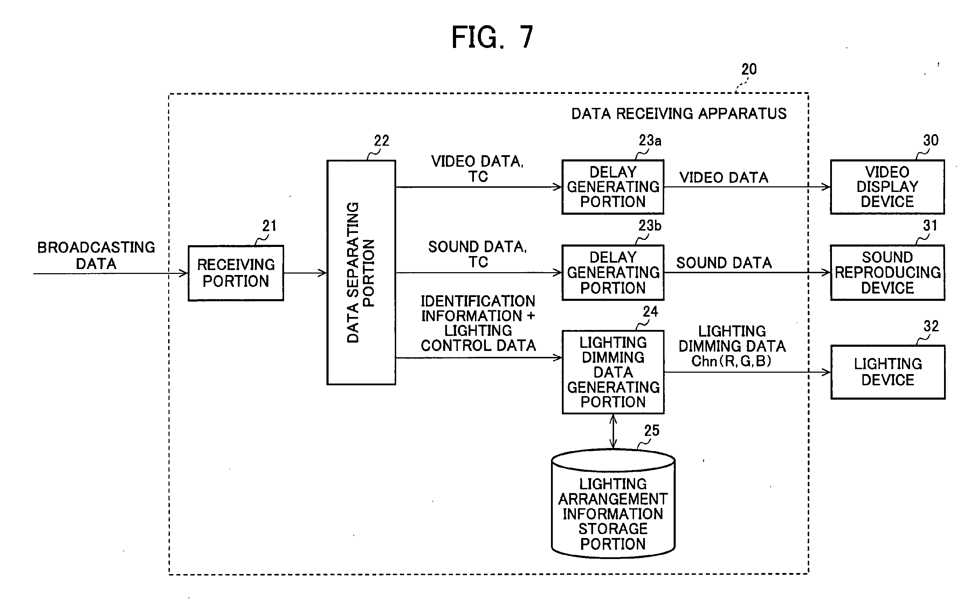

Fig. 7 is a block diagram illustrating an exemplary schematic configuration of an audio-visual environment controlling system according to an embodiment of the present invention. In the figure, 20 denotes a data receiving apparatus, 30 denotes a video display device (hereinafter referred to as a display), 31 denotes a sound reproducing device, and 32 denotes a lighting device.
The data receiving apparatus 20 is provided with a receiving portion 21, a data separating portion 22, delay generating portions 23a and 23b, a lighting dimming data generating portion 24 as driving control data generating means, and a lighting arrangement information storage portion 25 as means for storing device arrangement information.
The data receiving apparatus 20 receives broadcasting data which multiplexes the video data, the sound data, the identification information, and the lighting control data by the receiving portion 21, and separates the video data, the sound data, the identification information, and the lighting control data from the broadcasting data by the data separating portion 22.

The video data and the sound data which are separated by the data separating portion 22 are transmitted to the delay generating portions 23a and 23b together with TC (Time Code) that indicates starting time of the video data and the sound data, and the video data is transmitted through the delay generating portion 23a to the video display device 30 and the sound data is transmitted through the delay generating portion 23b to the sound reproducing device 31. Moreover, the identification information and the lighting control data which are separated by the data separating portion 22 are transmitted to the lighting dimming data generating portion 24.

The lighting arrangement information storage portion 25 stores arrangement information of each lighting device 32 installed in an audio-visual environment space (real space) of a viewer, and sends the arrangement information of the lighting devices 32 as appropriate to the lighting dimming data generating portion 24 in response to a command from the lighting dimming data generating portion 24.
Here, for example, when an audio-visual environment space of a viewer is such that, as illustrated in Fig. 3, two lighting devices 32 are installed around the video display device 30, and the lighting device Ch1 is the type of being installed on the floor and produces indirect lighting, whereas the lighting device Ch2 is in the type of being installed on the ceiling and produces direct lighting, it is necessary that the lighting arrangement information storage portion 25 accumulates information about the number of lighting devices, the relative position to the video display device 30, and the lighting method, so that each of the lighting devices 32 is allowed to be controlled individually according to the installation position thereof.
Therefore, for example, it may be configured such that identifiers are applied corresponding to individual lighting devices arranged in an audio-visual space of a user, and the lighting arrangement information storage portion 25 keeps information about the relative position to the video display device 30 and the lighting method for each of the identifier in a table format.

Based on the identification information and the lighting control data separated by the data separating portion 22 and the arrangement information of the lighting devices 32 in the actual audio-visual environment space acquired from the lighting arrangement information storage portion 25, the lighting dimming data generating portion 24 approximates driving control data for performing drive control of the lighting devices 32 installed in the actual audio-visual environment space of the viewer (for example, when left and right lighting control data are received, but there is only one lighting device in the center, approximating an average value of two lighting control data to the actual lighting control data, etc.) and generates lighting dimming data (RGB data) to output to the lighting devices 32.

Note that, output timing of the lighting dimming data transmitted to the lighting devices 32 needs to be synchronous with output timings of the video data and the sound data, and therefore, the delay generating portions 23a and 23b are provided so that the video data and the sound data separated by the data separating portion 22 are delayed for the time required for conversion into lighting dimming data corresponding to an actual audio-visual environment, for example, by the lighting dimming data generating portion 24, for synchronization with the lighting dimming data.

As the lighting device 32, for example, one in which LED light sources of respective colors of R (red), G (green), and B (blue), which is able to be illumination-controlled independently, are arranged in a certain cycle is usable, and these LED light sources of three primary colors emit illumination light of desired color and luminance. However, the lighting device 32 may have any configuration capable of controlling lighting colors and brightness in an environment around the video display device 30, is not limited to the combination of LED light sources emitting light of predetermined colors as described above, and may be configured by white LEDs and color filters, or a combination of a white lamp or a fluorescent tubes and color filters, and color lamps, etc. may also be applied. Further, the representation is not limited to in respective colors of R (red), G (green), and B (blue), and the representation may be performed using, for example, lighting color temperatures (unit: K). Note that, Fig. 7 illustrates a case where the lighting device 32 is driven with RGB data.

Moreover, the data receiving apparatus 20 of the audio-visual environment controlling system may be provided on the video display device 30 and the sound reproducing device 31 either integrally or separately.

As described above, the data receiving apparatus 20 in the present embodiment is allowed to appropriately control the lighting device 32 installed in the actual audio-visual environment space by approximating driving control data based on the identification information and the lighting control data acquired from outside.

Next, description will be given for lighting control data serving as audio-visual environment control data related to a lighting device, with reference to drawings.

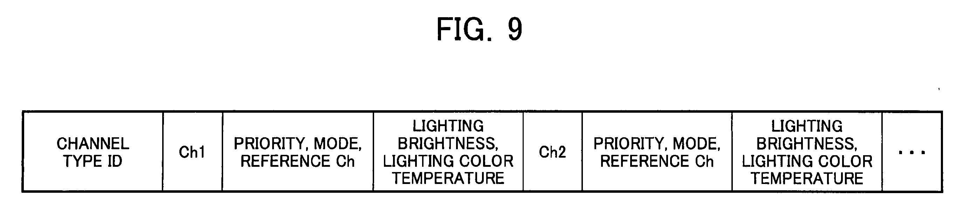

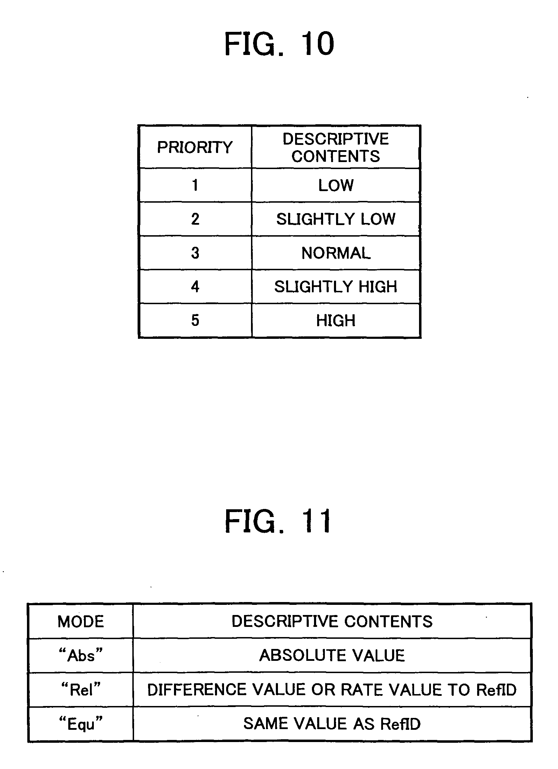

Fig. 9 is a view illustrating an example of descriptive contents of lighting control data. The example includes a channel type ID (identification information) which represents an arrangement pattern of one or more lighting device in a virtual audio-visual environment space, priority information (illustrated in Fig. 10) which represents priority order for causing a plurality of lighting devices to emit light, mode information (illustrated in Fig. 11) which represents a method for describing brightness and colors of a plurality of lighting devices, a reference Ch (Channel) which means reference lighting referred to when brightness and colors of a plurality of lighting devices are obtained, lighting brightness information, and lighting color temperature information. Note that, a lighting method (not shown) is also able to be described as necessary. Note that, to represent the brightness, not lux (lx) but candela (Cd), lumen (lm), and the like may be used. Moreover, to represent the color, not a color temperature but an XYZ color system, an RGB color system, a YCbCr color system, and the like may be used.
The information is all information useful for producing an atmosphere and a realistic sensation for scenes of video data with illumination light.

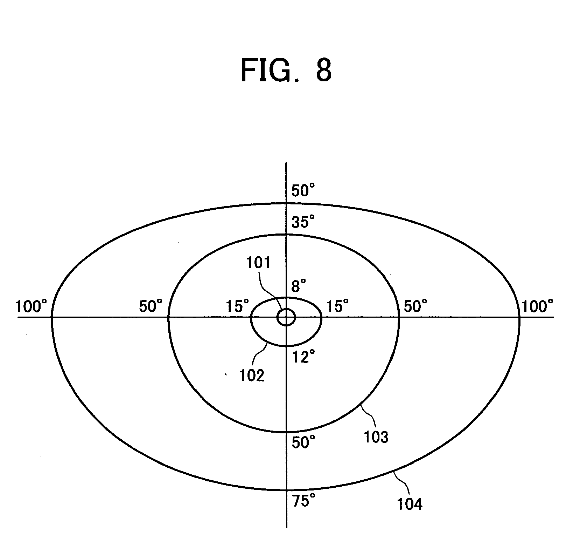

Here, according to Hatada, et al. , as illustrated in Fig. 8, the human visual field is classified into a discriminative visual field 101, an effective visual field 102, an induced visual field 103, and an auxiliary visual field 104 by the roles of the visual functions (Toyohiko Hatada, Haruo Sakata, and Hideo Kusaka, "Induced Effect of Direction Sensation with Display Size -Basic Study of Realistic Feeling with Wide Screen Display-" , The Journal of the Institute of Television Engineers of Japan, Vol. 33, No. 5, pp.407 - 413 (1979)).
The discriminative visual field 101 is a range capable of precisely accepting high-density information such as graphical discrimination, and the effective visual field 102 is a range that is capable of accepting natural information only with eye movement although the discrimination ability is lower than the discriminative visual field 101. And, the induced visual field 103 is a range having an influence when judging the overall outside world information although it only has a recognizing ability to the extent of recognizing the presence of presentation stimuli and performing simple discrimination. The auxiliary visual field 104 is a range only capable of discriminating the presence of stimuli.

By the way, current high-definition televisions are designed such that a video is displayed in a range covering the effective visual field 102 among the above. That is, no information such as a video and lighting is displayed in the induced visual field 103 and the auxiliary visual field 104. Accordingly, it is expected that a realistic sensation is further enhanced by irradiating lighting even to the induced visual field 103 and the auxiliary visual field 104.

For example, in the audio-visual environment space of Fig. 4 realized by the arrangement of the lighting devices illustrated in Fig. 3 described above, by lighting the back face of the display 30, not only a realistic sensation is enhanced with the induced visual field and the auxiliary visual field around the display 30 covered with lighting, but also reproduction of environment light is able to be realized with lighting from the ceiling.

Further, in the audio-visual environment space of Fig. 6 realized by the arrangement of the lighting devices illustrated in Fig. 5 described above, by lighting the back face of the display 30, not only a realistic sensation is enhanced with the induced visual field and the auxiliary visual field around the display covered with lighting, but also reproduction of directionality of light is able to be realized with brightness and colors of right and left lighting of the display 30 changed.

Fig. 10 is a view illustrating an example of priority information.
Here, illustrated is an example of information representing priority order for causing a plurality of lighting devices to emit light, where, for example, priority is set to 5 stages (low, slightly low, normal, slightly high, and high) and only lighting with high priority is allowed to irradiate. Thereby, even in a case where the number of lightings and the arrangement place are restricted on the reception side and the lighting arrangement pattern in the virtual audio-visual environment space is different from the lighting arrangement situation in the actual audio-visual environment space, the condition of lighting which is desired to be turned on by priority on the transmission side is allowed to be realized on the reception side by referring to a lighting value of the lighting with the highest priority.

Fig.11 is a view illustrating an example of mode information.
Here, there is an example of mode information representing a method for describing brightness and colors of a plurality of lighting devices, which shows that a method for describing a lighting value of other lighting is set to the reference lighting RefID serving as a standard, for example. When the mode is "Abs", an absolute value related to brightness and a color of lighting is described for each lighting device. When the mode is "Rel" , a difference value or a rate value related to brightness and a color of lighting with respect to the reference lighting RefID is described for each lighting device. When the mode is "Equ" , Equ is described for each lighting device as the same value with the reference lighting RefID.

In contrast to the case where brightness and colors of a plurality of lighting devices are described with the mode "Abs", for example, when the mode "Rel" is used to increase the ambient lighting level (unit: lx) by 100 lx, reduce the color temperature by 1000 K, increase the ambient lighting level by 10 %, or reduce the color temperature by 20 % than the reference lighting, the data amount representing brightness and colors of a plurality of lighting devices is reduced, which is effective. Further, in contrast to the case where brightness and colors of a plurality of lighting devices are described with the mode "Abs", for example, when "Equ" is used so that brightness and colors of ambient lighting have the same value as the reference lighting, the data amount representing brightness and colors of a plurality of lighting devices is reduced, which is effective.

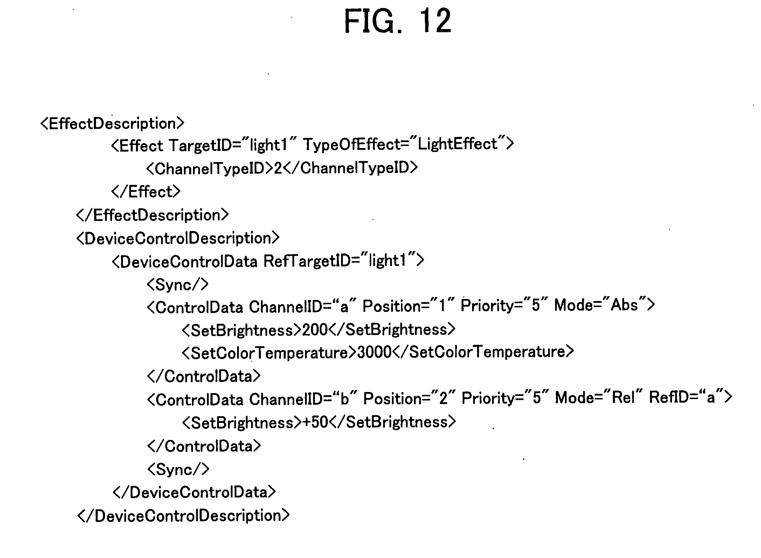

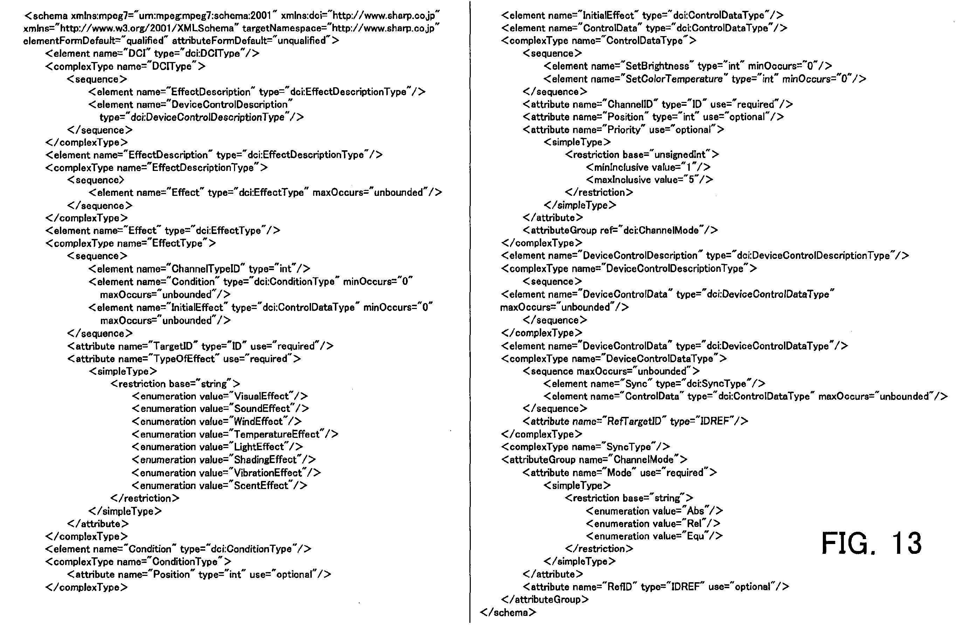

Fig. 12 is a view for explaining an example of lighting control data described in an XML format, and Fig. 13 is an explanatory view illustrating XML schema corresponding to lighting control data.
In Fig. 12, since the channel type ID is described as 2, it is shown that the lighting control data corresponds to arrangement of lighting devices according to the arrangement pattern of the channel type ID "2" in the identification information of Fig. 2 and control data for lighting devices in the arrangement of the lighting devices illustrated in Fig. 5 is described.
Moreover, channel IDs for identifying each lighting control data of two lighting devices are a and b, respectively, and Ch numbers of lighting devices corresponding to the lighting control data are "1" and "2". That is, it is shown that position information "1" is an attribute of the lighting device Ch1 illustrated in Fig. 5, and position information "2" is an attribute of the lighting device Ch2.

In addition, both lighting control data of the channel IDs "a" and "b" have the priority of 5. The lighting control data of the channel ID "a" is such that the lighting level value is 200 lx and the color temperature is 3000 K, and the lighting control data of the channel Id "b" is such that the lighting level value is 250 lx increased by 50 lx than the lighting control data of the channel ID "a" and the color temperature is the same value of 3000 K since no specific description is made.
Note that, as to the reference channel of mode information such as Rel and Equ, reference is able to be made by attaching a channel ID to each ControlData, however, the reference destination is not limited to the channel ID for each ControlData and, for example, position information may be referred to.

The data receiving apparatus 20 receives video data and/or sound data, identification information, and lighting control data included in broadcasting data, and based on the identification information, the lighting control data, and the arrangement information of the actual lighting devices 32 acquired from the lighting arrangement information storage portion 25, the lighting dimming data generating portion 24 generates driving control data for performing drive control of the actual lighting devices 32, and the method of which will be described.
First, the lighting dimming data generating portion 24 compares the arrangement pattern of virtual lighting devices indicated by the identification information with the arrangement information of the lighting devices 32 in the actual audio-visual environment space acquired from the lighting arrangement information storage portion 25, and converts the lighting control data that is produced supposing the virtual audio-visual environment space, without correction, into data for controlling driving of the actual lighting devices if the number, the arrangement place, and the lighting method of both lighting devices are matched.

Moreover, it is possible to use the position and size of the lighted place close to the arrangement of the actual lighting devices, or to calculate a weighting average value of lighting control data (for example, lighting brightness and lighting color temperature) for a plurality of virtual lighting devices to apply as lighting control data of the actual lighting devices when the number, the arrangement place, and the lighting method of both lighting devices are not matched, for example, by comparing the position and size of a lighted place (such as wall face or display) by individual arrangement places and lighting methods of both lighting devices, or the distance between the lighting device and the lighted place or the angle formed by the light-irradiation direction and the lighted place, etc.. At this time, it is also useful to consider priority information of the lighting control data and various conversion methods are usable.

For example, broadcasting data includes identification information of the arrangement pattern indicated by the channel type ID "1" and lighting control data corresponding thereto and when an actual audio-visual environment space of a viewer is arrangement of lighting devices illustrated in Fig. 5, the number, the arrangement place, and the lighting method of both lighting devices are not matched by comparing an arrangement pattern of virtual lighting devices indicated by the identification information with arrangement information of the lighting devices 32 in the actual audio-visual environment space acquired from the lighting arrangement information storage portion 25.
Comparing the position and size of individual lighted places, however, the lighting device Ch1 in the virtual audio-visual environment space lights around the back face of the display and the place is lighted by the lighting devices Ch1 and Ch2 in the actual audio-visual environment space (see Fig. 4 and Fig. 6), so that, among the lighting control data, the lighting control data of the lighting device Ch1 is applicable to the lighting devices Ch1 and Ch2 in the actual audio-visual environment space.

Moreover, when the relation therebetween is opposite, that is, when the virtual audio-visual environment space has the arrangement pattern indicated by the channel type ID "2" and the actual audio-visual environment space of the viewer has the arrangement of the lighting devices illustrated in Fig. 3, it is possible to calculate lighting control data to be applied to the lighting device Ch1 in the actual audio-visual space from values of the lighting control data of the lighting devices Ch1 and Ch2 with the channel type ID "2", and in such a case, a weighting average value of brightness and color temperatures of the lighting control data in consideration of each priority of the lighting devices Ch1 and Ch2 may be lighting control data for each. Moreover, the calculation result of the lighting device Ch1 in the actual audio-visual space may be applied to the lighting control data to be applied to the lighting device Ch2 in the actual audio-visual space.

### (Embodiment 2)

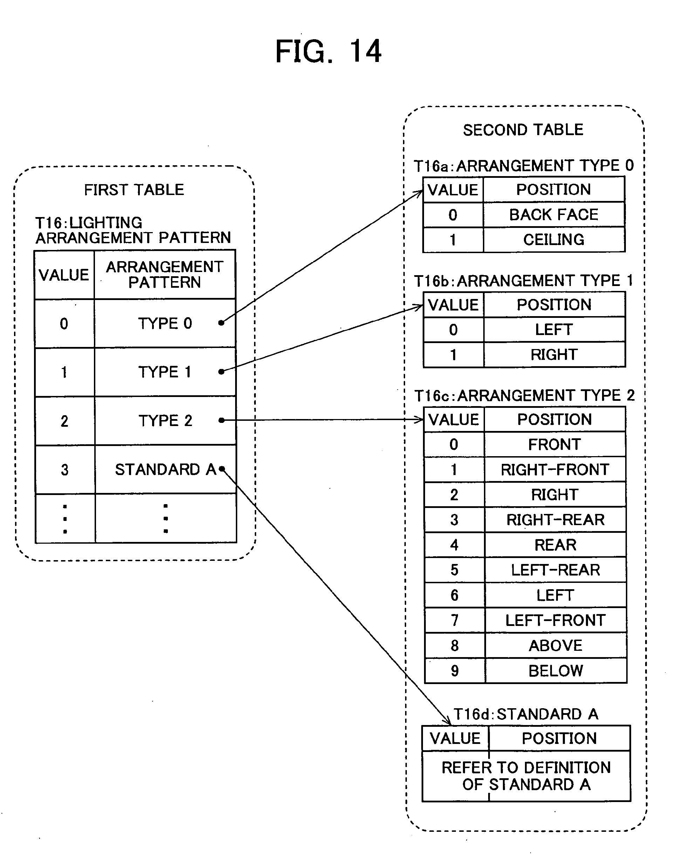

Description will be given for a second embodiment of the present invention with reference to drawings. Since the schematic configuration of a data transmitting apparatus and a data receiving apparatus in the present embodiment is similar to Fig. 1 and Fig. 7, the detailed description of which will be omitted.
First, an example of lighting devices will be described. Fig. 14 is a view illustrating an arrangement pattern of a plurality of lighting devices and a configuration of tables which are referred to when a position of each lighting device is described. The reference table is composed of a first table (T16) that indicates an arrangement pattern of lighting devices in an audio-visual environment space and second tables (T16a, T16b, T16c, and T16d) that indicates a position of each lighting device.

The data transmitting apparatus 10 transmits a value that indicates a lighting arrangement pattern (ChannelTypeID), a value that indicates a position of each lighting device (Position), and control data of each lighting device. For example, when a content producer transmits control data supposing an environment where lighting devices are on the back face of the display and on the ceiling, data defined by the table T16a in Fig. 14 is used. In this case, with ChannelTypeID = 0, the lighting control data is transmitted with Position = 0 attached to data for controlling the lighting on the back face and data of Position = 1 attached to data for controlling the lighting on the ceiling. Moreover, when the content producer supposes an environment where multiple-channel lighting devices exist as shown in the table T16c, it is taken as ChannelTypeID = 2, the lighting control data is transmitted with Position = 2 attached to data for controlling the right lighting and data of Position = 6 attached to data for controlling the left lighting. Here, the lighting control data indicates control parameters of lighting brightness, color temperatures, time information, and the like.

Further, the position of lighting may be defined by the external standard (hereinafter referred to as "standard A") and the specification (hereinafter referred to as "specification B"), and in such a case, a standard name (standard A) and a specification name (specification B) are described in the first table T16 that indicates an arrangement pattern, and the second table T16d that indicates the position of each lighting is determined based on position information defined by each standard. For example, it is taken as ChanneTypelID = 3 and a value determined in advance based on the definition of the standard A is used for the value of Position in order to transmit control data based on the lighting arrangement defined by the standard A.

In this manner, a lighting device to be controlled is determined referring to the first table that indicates the arrangement pattern of lighting devices and the second table that indicates the position, for example, as a peripheral device in an audio-visual environment space.
When the normal lighting arrangement pattern frequently used is defined as the first and second tables in advance, a viewer is allowed to perform setting a lighting environment (such as setting lighting devices corresponding to lighting control data) based on the arrangement pattern. Moreover, since the content producer side is also allowed to design lighting control values based on the arrangement pattern defined in advance, it is possible to reduce the burden of producing lighting control data.

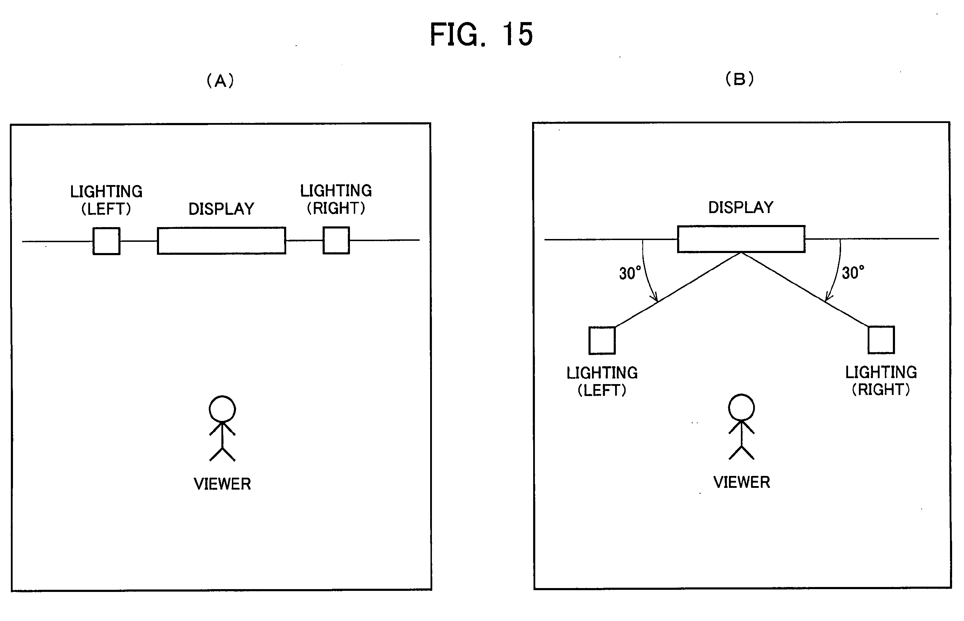

By defining the arrangement with the use of two tables in this manner, for example, the arrangement type 1 prescribes such an arrangement that a display and right and left lighting devices are in line (Fig. 15 (A) ) , whereas, even in the same right and left arrangement, when an arrangement in front of the display face by 30° (Fig. 15 (B) ) is prescribed, just by adding the second table defining a new arrangement pattern (Fig. 15(B)) and adding a field indicating the arrangement pattern to the first table, expansion is allowed without affecting the existing definition.
Note that, the addition of Position described above is not essential and may be omitted by deciding in advance that control data for all positions defined by the ChannelTypeID are described in accordance with the predetermined order. When Position is attached, since only minimum necessary control data may be described (for example, when control data of the right lighting only is sent, only control data of Position = 2 may be described in the table T16c), it is possible to reduce the data amount.

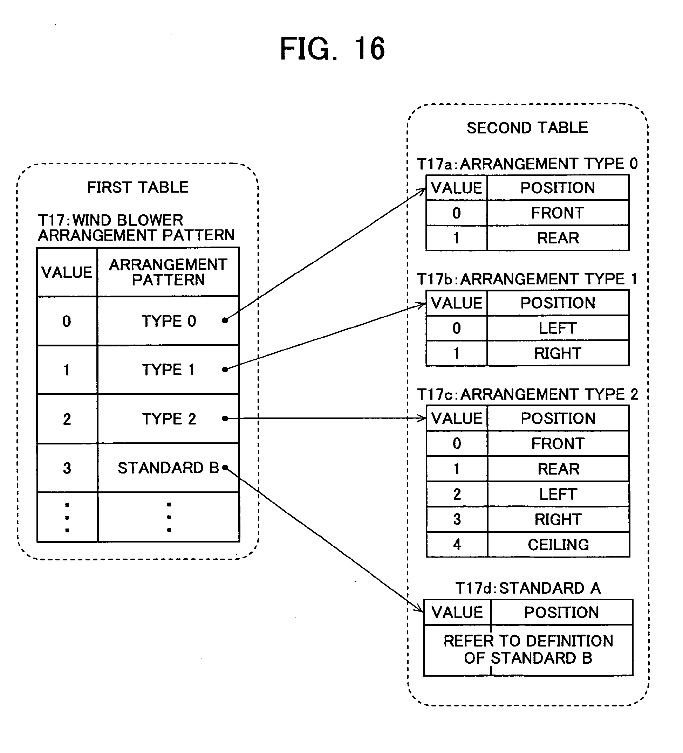

Next, an example of a wind blower will be described. In the case of the wind blower, control data is parameters of wind speed (m/s), the number of revolutions (r/m), and the like. Fig. 16 is a view illustrating an arrangement pattern of a plurality of wind blowers and a configuration of tables which are referred to when a position of each wind blower is described. The positions of wind blowers in an audio-visual environment space are comprised of a first table (T17) that indicates an arrangement pattern and second tables (T17a, T17b, T17c, and T17d) that indicates positions, similarly to the case of lighting devices. Such a configuration allows expansion without affecting the existing definition.

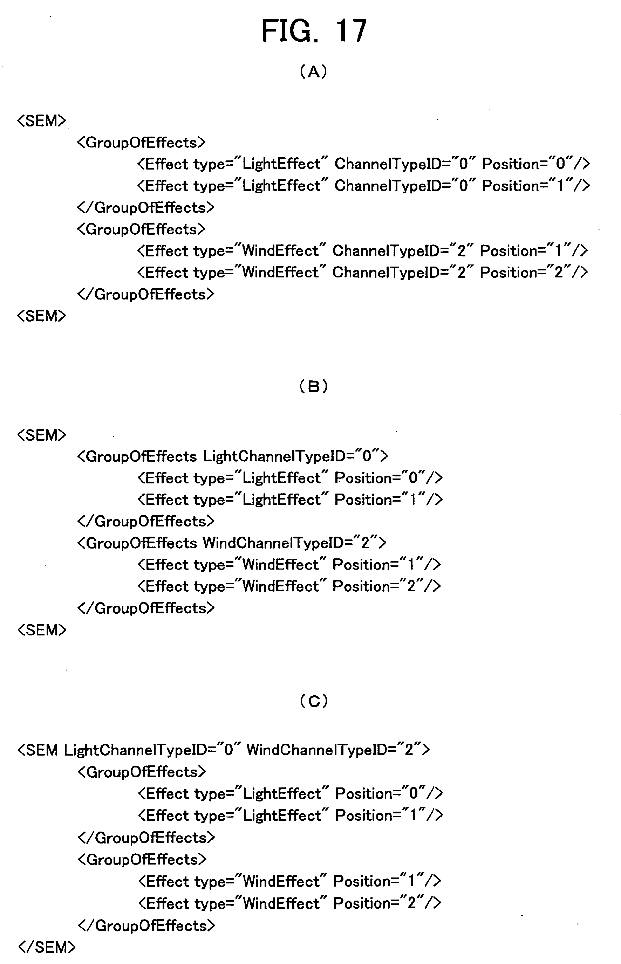

Next, description will be given for a case where lighting devices and wind blowers are mixed. Fig. 17 is a view illustrating an example of arrangement patterns and positions of lighting and wind blowers described by an XML document. In Fig. 17, description of specific control parameters of time information, lighting brightness and color temperatures, wind speed of wind blowers, and the like are omitted. The position (Position) is described in the unit of lighting/wind blower control data (in the unit of Effect element). Concerning the arrangement pattern (ChannelTypeID), Fig. 17 (A) shows an example of description in the unit of lighting/wind blower control data. Fig. 17(B) shows an example of description in the unit of a plurality of lighting/wind blower control data (in the unit of GroupOfEffect element). Fig. 17(C) shows an example of description with the entire control data (SEM element). Here, the arrangement pattern (ChannelTypeID) and the position (Position) are described as XML attributes (Attributes), but may be described as XML elements (elements) . Moreover, the ChannelTypeID may be described in another XML document for reference.
Next, operations of the data receiving apparatus 20 will be described. When receiving the ChannelTypeID that indicates a lighting arrangement pattern and Position that indicates a position of each lighting, the data receiving apparatus 20 refers to the first table and the second table to determine the lighting position with which control data is associated.

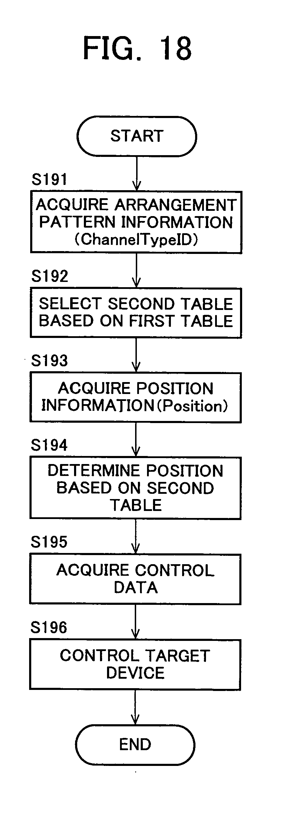

Fig. 18 is a flowchart of operations related to determination of lighting to be controlled in the lighting dimming data generating portion 24. First, arrangement pattern information (ChannelTypeID) is acquired (step S191), and based on the first table, the second table used for determining position information is selected (step S192). Then, position information (Position) is acquired (step S193), a lighting position with which control data is associated is determined (step S194) from Position and the second table. Subsequently, control data is acquired (step S195), and a device corresponding to the position determined at step S194 is controlled (step S196).

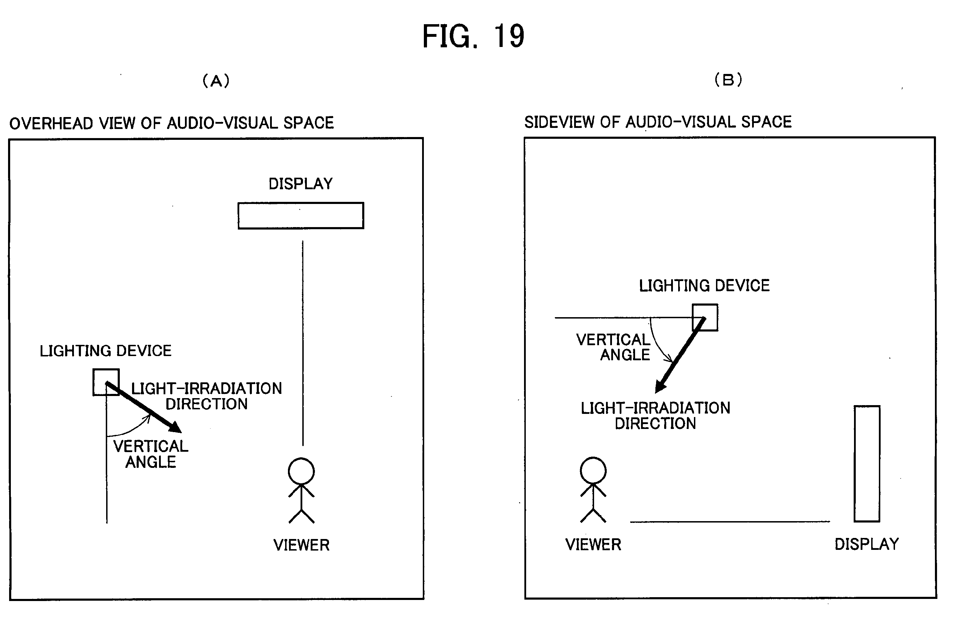

Moreover, not only positions of respective peripheral devices but also directions (light-irradiation directions and wind directions) may be described in the second tables in Fig. 14 and Fig. 16 and audio-visual environment control data. Fig. 19 is a view for explaining an example of a light-irradiation direction in a lighting device. Fig. 19(A) is a view of an audio-visual space viewed from the top and Fig. 19 (B) is a view of an audio-visual space viewed from the horizontal direction (side). In this example, the light-irradiation direction is described by a first angle in the horizontal direction (horizontal angle) and a second angle in the vertical direction (vertical angle) with a line connecting a display on the floor face and a viewer as a standard. The wind direction of wind blowers is also able to be described with the horizontal angle and the vertical angle similarly. Alternatively, a normal line from a viewer to a display, a line connecting a viewer and the center of a display, or the like may be a standard.
Obviously, the description method of the arrangement pattern and the positions in the present embodiment is applicable not only to lighting and wind blowers but also to peripheral devices such as scent generating devices and effect sound generating devices similarly.

### (Third embodiment)

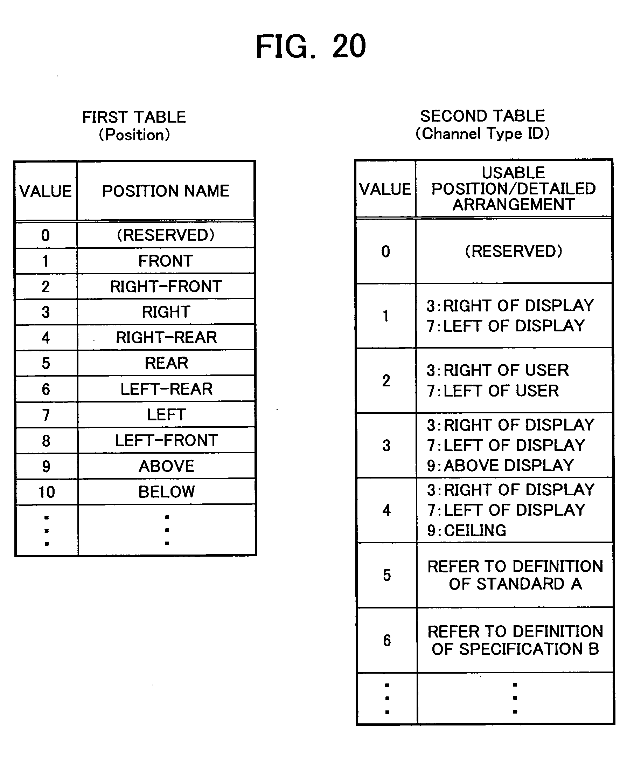

Description will be given for a third embodiment of the present invention with reference to drawings. Fig. 20 is a view illustrating another exemplary configuration of tables which are referred to when a position of each peripheral device is described. The reference table is composed of a first table which prescribes positions (Positions) such as "left", "right", and "front", and a second table which prescribes a list of usable positions and detailed arrangement of each usable position. The definition of Position in the first table of Fig. 20 is an example and faces such as "left face", "right face", and "front face" may be defined by putting positions included in a specific wall face of an audio-visual environment space together. For example, left-front, left, and left-rear in the first table may be collectively defined as the left face and right-front, right, and right-rear in the first table may be collectively defined as the right face.

The detailed arrangement may be described in the second table, or may be described with a standard name (standard A) and a specification name (specification B) so as to refer to the external definition like the case of ChannelTypeID = 5 or 6. The definition of the ChannelTypeID in the second table of Fig. 20 is an example and ChannelTypeID such as "all positions are usable" or "detailed arrangement is user-defined" may be defined.
Moreover, as arrangement on the right and left, for example, when it is desired to add arrangement as illustrated in Fig. 15 (B), by additionally defining "3: position with 30° from display face, 7: position with 30° from display face" or the like as ChannelTypeID = 7 in the second table, expansion is allowed easily without affecting the existing definition.

The above-described table configuration allows to define various patterns in the second table in accordance with an audio-visual environment and an intention of a content producer, even with arrangement for the same position (for example, left and right in the first table).
Similarly to the embodiment 2, the above-described table configuration is not limited to lighting devices, but may obviously be applicable also to peripheral devices such as wind blowers, scent generating devices, and effect sound generating devices similarly.

### (Embodiment 4)

Although the above-described embodiments 1, 2, and 3 of the present invention describe the case where identification information and lighting control data are attached to broadcasting data as additional data for transmission, when no additional data is attached to broadcasting data, it is possible to realize an optimal audio-visual environment when reproducing the video data and/or the sound data by transmitting/receiving identification information and lighting control data corresponding to video data and/or sound data which are viewed/listened to/from an external server apparatus or the like.

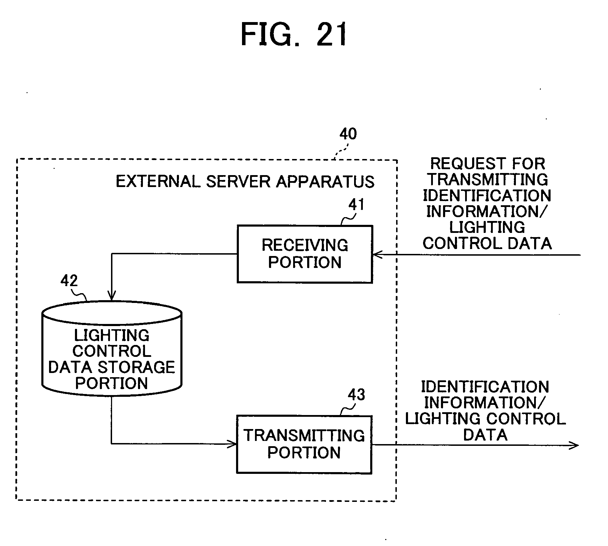

Fig. 21 is a block diagram illustrating an exemplary main configuration of an external server apparatus according to an embodiment 4 of the present invention.
An external server apparatus 40 in the present embodiment corresponds to a data transmitting apparatus of the present invention, and is provided with a receiving portion 41 which receives a transmission request of identification information and lighting control data related to specific video data and/or sound data (content) from the data receiving apparatus side, a lighting control data storage portion 42 which stores identification information and lighting control data for each video data and/or sound data (content), and a transmitting portion 43 which transmits identification information and lighting control data requested for transmission to the requesting data receiving apparatus.

Here, the lighting control data stored in the lighting control data storage portion 42 of the present embodiment(not shown) describes a start time code of an arbitrary segment (for example, scene or shot) intended by a content producer and the like, and lighting control data of video data and/or sound data (content) requested for transmission are transmitted from the transmitting portion 43 to the requesting data receiving apparatus together with a TC (Time Code) that indicates starting time of the video data and/or the sound data (segment). Moreover, it may be configured such that an ID is attached to an arbitrary segment (for example, scene or shot) intended by a content producer and the like, and lighting control data of video data and/or sound data (content) requested for transmission are transmitted from the transmitting portion 43 to the requesting data receiving apparatus together with the ID of the segment.

Next, description will be given for a system configuration including a data receiving apparatus (which corresponds to an audio-visual environment controlling apparatus of the present invention) which controls audio-visual environment lighting upon reception of identification information and lighting control data delivered from the external server apparatus 40.

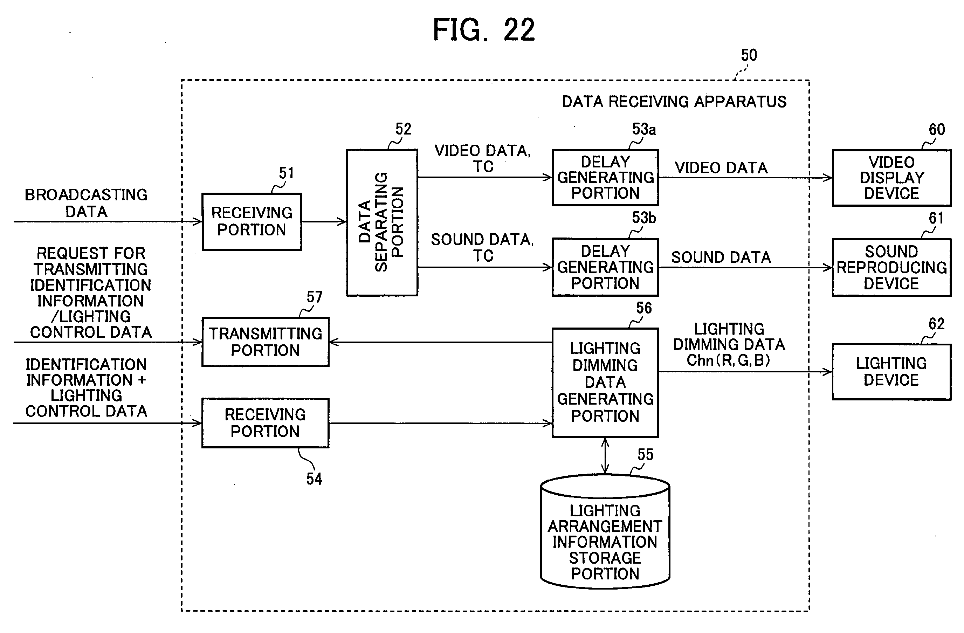

Fig. 22 is a block diagram illustrating an exemplary main configuration of an audio-visual environment controlling system according to the embodiment 4 of the present invention. In the figure, 50 denotes a data receiving apparatus, 60 denotes a video display device, 61 denotes a sound reproducing device, and 62 denotes a lighting device.
The data receiving apparatus 50 is provided with a receiving portion 51 which receives broadcasting data input from a transmission path for demodulation and error correction, and a data separating portion 52 which separates/extracts, from output data of the receiving portion 51, video data output to the video display device 60 and sound data output to the sound reproducing device 61, respectively.

Moreover, the data receiving apparatus 50 is provided with a transmitting portion 57 which delivers a transmission request of identification information and lighting control data corresponding to video data (content) to be displayed through a communication network to the external server apparatus 40 based on an instruction from a lighting dimming data generating portion 56, and a receiving portion 54 which receives the identification information and the lighting control data requested for transmission from the external server apparatus 40 through the communication network.

A lighting arrangement information storage portion 55 stores arrangement information of each lighting device 62 installed in an audio-visual environment space (real space) of a viewer and transmits arrangement information of the lighting device 62 as appropriate to the lighting dimming data generating portion 24 in response to a command from the lighting dimming data generating portion 56. Since the lighting arrangement information storage portion 55 is similar to the lighting arrangement information storage portion 25 of the embodiment 1, the detailed description of which will be omitted.

Similarly, the lighting dimming data generating portion 56 generates lighting dimming data (RGB data) for appropriately controlling the lighting device 62 installed in the actual audio-visual environment space of the viewer based on the identification information and the lighting control data received from the receiving portion 54 and the arrangement information of the lighting device 62 acquired from the lighting arrangement information storage portion 55 and outputs it to the lighting device 32, and is the same as the lighting dimming data generating portion 24 in the embodiment 1 except for giving a transmission request of the identification information and the lighting control data, and therefore, the description of which will be omitted.

Note that, as described in the embodiment 1 above, output timing of the lighting dimming data transmitted to the lighting device 62 needs to be synchronous with output timings of the video data and the sound data, and therefore, delay generating portions 53a and 53b are provided so that the video data and the sound data separated by the data separating portion 52 are delayed , for example, for the time required for conversion into lighting dimming data corresponding to an actual audio-visual environment in the lighting dimming data generating portion 56, in order to synchronize them with the lighting dimming data.

Thereby, since such a configuration is provided to control audio-visual environment lighting, based on identification information and lighting control data corresponding to video data and/or sound data (program content) obtained from the external server apparatus even when identification information and lighting control data are not attached to broadcasting data, it is possible to switch and control the audio-visual environment lighting with arbitrary timing in accordance with an intention of a video producer and suppress the increase in the data amount at the same time and realize optimal lighting control of the audio-visual environment similar to the embodiment 1 described above.

As described above, since in the above-described embodiments 1, 2, 3, and 4, identification information (channel type ID) and lighting control data are always transmitted or received as a pair, it is possible to detect which arrangement pattern of lighting devices in a virtual audio-visual environment space is supposed to produce lighting control data, and therefore, it is possible to convert the lighting control data to appropriate lighting dimming data according to the arrangement situation of the lighting devices in an actual audio-visual environment space.

The data transmitting apparatus, the data transmitting method, the audio-visual environment controlling apparatus, the audio-visual environment controlling system, and the audio-visual environment controlling method of the present invention can be realized in various embodiments without departing from the gist of the present invention described above. For example, the audio-visual environment controlling apparatus may be provided within the video display device and may obviously be configured such that the external lighting devices can be controlled based on various information included in the input video data.

Moreover, although description has been given taking a lighting device as an example of a peripheral device arranged in a virtual audio-visual environment space, the present invention is not limited to the lighting device and may obviously be applicable to peripheral devices affecting an audio-visual environment, such as air conditioners, wind blowers, vibration devices, and scent generating devices. When the present invention is applied to these peripheral devices affecting the audio-visual environment, an arrangement pattern including output position/direction of producing effects including, for example, for which wind or scent blows, may be defined by identification information.

Note that, in the present invention, video data and/or sound data (content) is not limited to a content for a television program sent by television broadcasting and may be a content for a production stored in a medium such as a Blu-ray Disc and a DVD. That is, input video data is not limited to one obtained by receiving television broadcasting, and the present invention is also applicable when video data reproduced from an external reproducing device is input.

### EXPLANATIONS OF REFERENCE NUMERALS

10...data transmitting apparatus; 11 ... data multiplexing portion; 12...transmitting portion; 20...data receiving apparatus; 21, 51...receiving portion; 22, 52... data separating portion; 23a, 23b, 53a, 53b...delay generating portion; 24, 56...lighting dimming data generating portion; 25, 55...lighting arrangement information storage portion; 30, 60...video display device; 31, 61...sound reproducing device; 32, 62...lighting device; 40...external server apparatus; 41...receiving portion; 42...lighting control data storage portion; 43...transmitting portion; 54...receiving portion; and 57...transmitting portion.

## Claims

1. A data transmitting apparatus for transmitting video data and/or sound data, comprising:
transmitting means for transmitting identification information indicating an arrangement pattern of a peripheral device in a virtual audio-visual environment space and audio-visual environment control data for the peripheral device in the virtual audio-visual environment space by attaching them to the video data and/or the sound data.

2. The data transmitting apparatus as defined in claim 1, wherein
the arrangement pattern of the peripheral device indicated by the identification information includes such an arrangement pattern that the peripheral device is installed on a ceiling in the virtual audio-visual environment space.

3. The data transmitting apparatus as defined in claim 1, wherein
the arrangement pattern of the peripheral device indicated by the identification information includes such an arrangement pattern that the peripheral device is installed on a left side around a video display device for displaying the video data in the virtual audio-visual environment space.

4. The data transmitting apparatus as defined in claim 1, wherein
the arrangement pattern of the peripheral device indicated by the identification information includes such an arrangement pattern that the peripheral device is installed on a right side around a video display device for displaying the video data in the virtual audio-visual environment space.

5. The data transmitting apparatus as defined in claim 1, wherein
the arrangement pattern of the peripheral device indicated by the identification information includes such an arrangement pattern that the peripheral device is installed around a rear back face part around a video display device for displaying the video data in the virtual audio-visual environment space.

6. The data transmitting apparatus as defined in any one of claims 1 to 5, wherein
the audio-visual environment control data includes position information indicating an installation position of the peripheral device constituting the arrangement pattern.

7. The data transmitting apparatus as defined in any one of claims 1 to 6, wherein
the audio-visual environment control data includes position information indicating an installation direction of the peripheral device constituting the arrangement pattern.

8. The data transmitting apparatus as defined in any one of claims 1 to 7, wherein
the audio-visual environment control data includes information indicating driving priority order for the peripheral device.

9. The data transmitting apparatus as defined in any one of claims 1 to 8, wherein
the audio-visual environment control data includes mode information representing a description method of the audio-visual environment control data for the peripheral device.

10. The data transmitting apparatus as defined in claim 9, wherein
the mode information includes information indicating that a driving control value for the peripheral device is described by an absolute value.

11. The data transmitting apparatus as defined in claim 9, wherein
the mode information includes information indicating that a driving control value for the peripheral device is described by a difference value from a driving control value for other designated peripheral device.

12. The data transmitting apparatus as defined in claim 9, wherein
the mode information includes information indicating that a driving control value for the peripheral device is described by a rate value to a driving control value for other designated peripheral device.

13. The data transmitting apparatus as defined in claim 9, wherein
the mode information includes information indicating that a driving control value for the peripheral device is the same as a driving control value for other designated peripheral device.

14. A data transmitting apparatus, comprising:
storage means for storing identification information indicating an arrangement pattern of a peripheral device in a virtual audio-visual environment space and audio-visual environment control data for the peripheral device in the virtual audio-visual environment space by associating them with video data and/or sound data; and
transmitting means for transmitting, upon reception of a transmission request from an external apparatus, the identification information and the audio-visual environment control data related to predetermined video data and/or sound data to the external apparatus giving the transmission request.

15. The data transmitting apparatus as defined in any one of claims 1 to 14, wherein
the peripheral device in the virtual audio-visual environment space is a lighting device.

16. The data transmitting apparatus as defined in any one of claims 1 to 14, wherein
the peripheral device in the virtual audio-visual environment space is a wind blowing device.

17. An audio-visual environment controlling apparatus, comprising:
receiving means for receiving video data and/or sound data, and receiving identification information indicating an arrangement pattern of a peripheral device in a virtual audio-visual environment space and audio-visual environment control data for the peripheral device in the virtual audio-visual environment space;
storage means for storing device arrangement information representing an arrangement pattern of a peripheral device in an actual audio-visual environment space; and
driving control data generating means for converting the audio-visual environment control data into driving control data for performing drive control of the peripheral device in the actual audio-visual environment space, using the identification information received by the receiving means and the device arrangement information stored in the storage means.

18. The audio-visual environment controlling apparatus as defined in claim 17, wherein
the audio-visual environment control data includes position information indicating an installation position of the peripheral device constituting the arrangement pattern.

19. The data transmitting apparatus as defined in claim 17 or 18, wherein
the audio-visual environment control data includes position information indicating an installation direction of the peripheral device constituting the arrangement pattern.

20. An audio-visual environment controlling system, comprising:
the audio-visual environment controlling apparatus as defined in claim 17;
a video/sound reproducing device for reproducing the video data and/or the sound data; and
a peripheral device installed around the video/sound reproducing device.

21. A data transmitting method for transmitting video data and/or sound data, comprising:
transmitting identification information indicating an arrangement pattern of a peripheral device in a virtual audio-visual environment space and audio-visual environment control data for the peripheral device in the virtual audio-visual environment space by attaching to the video data and/or the sound data.

22. A data transmitting method, comprising:
storing identification information indicating an arrangement pattern of a peripheral device in a virtual audio-visual environment space and audio-visual environment control data for the peripheral device in the virtual audio-visual environment space by associating them with video data and/or sound data; and
transmitting, upon reception of a transmission request from an external apparatus, the identification information and the audio-visual environment control data related to predetermined video data and/or sound data to the external apparatus giving the transmission request.

23. An audio-visual environment controlling method, comprising:
a step of receiving video data and/or sound data;
a step of receiving identification information indicating an arrangement pattern of a peripheral device in a virtual audio-visual environment space and audio-visual environment control data for the peripheral device in the virtual audio-visual environment space;
a step of storing device arrangement information representing an arrangement pattern of a peripheral device in an actual audio-visual environment space; and
a step of converting the audio-visual environment control data into driving control data for controlling driving of the peripheral device in the actual audio-visual environment space, using the identification information received and the device arrangement information stored.
